# EUROPEAN PATENT SPECIFICATION

(11) **EP 1 104 224 B1**
(45) Date of publication and mention of the grant of the patent: **27.12.2006**
(21) Application number: 00310272.0
(22) Date of filing: 20.11.2000
(51) Int. Cl.: H05F 3/02, H01J 29/86

(54) **Electronic apparatus with static voltage discharging means**
Elektronisches Gerät mit Vorrichtung zur Beseitigung elektrostatischer Ladungen
Appareil électronique comportant un dispositif de décharge des charges électrostatiques

(30) Priority: 26.11.1999 JP 33633199
(43) Date of publication of application: 30.05.2001
(73) Proprietor: SONY CORPORATION, Tokyo (JP)
(72) Inventor: Sugiura, Yutaka, c/o Career Development Int. Inc., Minato-ku, Tokyo (JP); Kaneko, Tadashi, c/o Sony Corporation, Shinagawa-ku, Tokyo (JP)
(74) Representative: Goddard, Frances Anna

(56) References cited:
- FR-A- 2 696 349
- US-A- 4 654 746
- US-A- 5 768 086
- US-A- 5 898 560

## Description

The present invention relates to an electronic apparatus having a cabinet that includes a metal portion.

US-A-5898560 discloses a device for removing a static charge from a electrically non-conductive fluid. The device receives fluid flow therethrough and has a conductive member for engaging the fluid. The conductive member is grounded.

US-A-5768086 discloses a portable device for dissipating static charge. It comprises a series arrangement of a resistor and a glow tube.

Conventionally, for example, in many of TV receivers using a CRT, a cabinet that surrounds the outer circumferential portion of the face panel of the CRT is made of a synthetic resin.

However, there occurs a case that to provide a product with a high-grade image or improve design performance it is desired to use a metal cabinet. In this case, it is necessary to ground the metal cabinet.

To this end, methods are employed in which a metal member such as a cabinet as mentioned above and a ground portion that is provided on a chassis board of an electronic apparatus are directly connected to each other or connected to each other via a resistor.

However, where the metal member and the ground portion are directly connected to each other as mentioned above, static electricity causes a sudden flow of current when a user touches the electronic apparatus. This causes the user an unpleasant feel.

Where the metal member and the ground portion are connected to each other via a resistor, when, for example, a high voltage occurs at the face panel portion of the CRT the high voltage cannot be absorbed only by the resistor. This also results in a problem that discharge or the like causes the user an unpleasant feel.

An aim of the present invention is therefore to provide an electronic apparatus having a cabinet that is made of metal partially or entirely which can effectively ground the metal portion of the cabinet and cope with an indirect lightning strike or the like, while reducing the impact of static electricity and preventing the generation of a high voltage.

One aspect of the present invention provides a electronic apparatus having a cabinet that is made of metal at least partially, comprising a discharge path that connects a metal portion of the cabinet to a ground portion provided in the electronic apparatus, the discharge path including a series circuit of a discharge tube and a parallel circuit of a first resistor and a high-voltage capacitor, and a second resistor that is connected in parallel to the series circuit.

The second resistor serves to cause a discharge current occurring constantly from the metal portion of the cabinet to flow to the ground and to prevent a steep current due to electrostatic discharge. The discharge tube serves to effectively absorb a high voltage occurring in the metal portion of the cabinet and to cause it to escape to the ground side.

For example, when a temporary high voltage has occurred at the ground portion side owing to an indirect lightning strike, the parallel circuit of the first resistor and the high-voltage capacitor converts high-voltage, long-wavelength pulses caused by the indirect lightning strike into as short pulses as possible by means of the capacitor and thereby prevents large power from being transmitted directly to the metal portion of the cabinet. By transmitting the pulses that have been reduced by the parallel circuit to the metal portion of the cabinet via the discharge tube that is connected in series to the parallel circuit, abrupt voltage increase at the cabinet side is prevented and hence influence on a user is minimised.

Therefore, by providing the above parallel circuit in the discharge path of the cabinet, in the electronic apparatus having the metal cabinet, it becomes possible to effectively ground the metal portion of the cabinet and to cope with an indirect lightning strike or the like while reducing impact of static electricity and preventing generation of a high voltage.

Another aspect of the present invention provides a electronic apparatus having a cabinet that is made of metal at least partially, comprising a discharge path that connects a metal portion of the cabinet to a ground portion provided in the electronic apparatus, the discharge path including a parallel circuit of a resistor and a discharge tube.

In the parallel circuit of the another aspect, the resistor serves to cause a discharge current occurring constantly from the metal portion of the cabinet to flow to the ground and to prevent a steep current due to electrostatic discharge. The discharge tube serves to effectively absorb a high voltage occurring in the metal portion of the cabinet and to cause it to escape to the ground side.

Therefore, by providing the above parallel circuit in the discharge path of the cabinet, in the electronic apparatus having the metal cabinet, it becomes possible to effectively ground the metal portion of the cabinet while reducing impact of static electricity and preventing generation of a high voltage.

Preferred embodiments of the present invention will now be described hereinbelow by way of example only with reference to the accompanying drawings, in which:
Fig. 1 is a schematic diagram showing the configuration of an electronic apparatus according to a first embodiment of the present invention;
Fig. 2 is a schematic diagram showing the configuration of an electronic apparatus according to a second embodiment of the invention; and

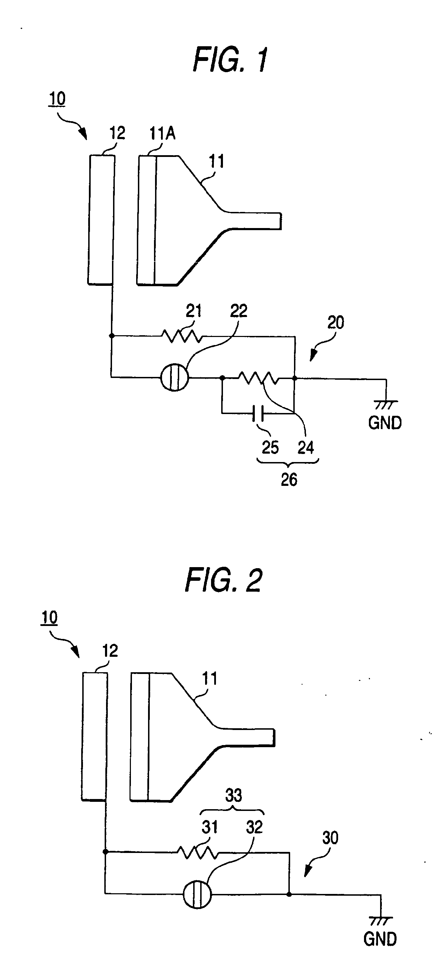

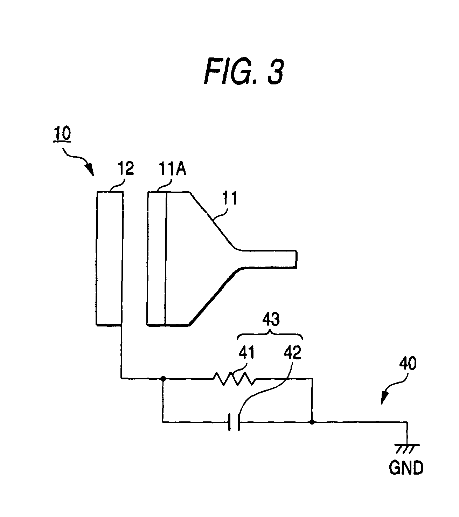

Fig. 1 is a schematic diagram showing the configuration of an electronic apparatus according to a first embodiment of the invention.

The electronic apparatus according to this embodiment is a TV receiver 10 using a CRT 11. The TV receiver 10 has a front cabinet 12 that surrounds the outer circumferential portion of a face panel 11A of the CRT 11. The front cabinet 12 is made of metal.

That is, by using the metal front cabinet 12, the TV receiver 10 of this embodiment is advantageous in design over TV receivers using a front cabinet made of a synthetic resin and realizes a product specification with an image of a higher grade than in the case of using a synthetic resin.

The TV receiver 10 is provided with a chassis board (not shown) that is mounted with various circuit parts, a back cabinet (not shown), etc. The chassis board is provided with a ground portion GND, which serves to ground the entire TV receiver 10 by using a power line.

A discharge path 20 is provided between the front cabinet 12 and the ground portion GND, whereby the front cabinet 12 is grounded.

The discharge path 20 has a series circuit in which a discharge tube 22 is connected in series to a parallel circuit 26 of a first resistor 24 and a high-voltage capacitor 25 and a second resistor 21 that is connected in parallel to the above series circuit.

Inserted between the front cabinet 12 and the ground portion GND, the second resistor 21 serves to absorb a current of CRT discharge that occurs constantly.

Connected in parallel to the second resistor 21, the series circuit consisting of the discharge tube 22 and the parallel circuit 26 of the first resistor 24 and the high-voltage capacitor 25 discharges at a voltage of 7 kV, for example.

The discharge path 20 having the above structure effectively discharges a voltage that occurs at the front cabinet 12 side and thereby keeps the front cabinet 12 side at a low potential. Further, the discharge path 20 prevents a sudden flow of current by means of the second resistor 21 and thereby reduces the influence of static electricity to a user.

The parallel circuit 26 consisting of the first resistor 24 and the high-voltage capacitor 25 is connected in series to the ground portion GND side of the discharge tube 22.

The parallel circuit 26 having the above structure has a function of causing a discharge current (mentioned above) from the discharge tube 22 to escape to the front cabinet 12 side as well as a function of converting high-voltage pulses occurring at the ground portion GND side into pulses having as low a voltage level as possible and causes those pulses to escape to the front cabinet 12 via the discharge tube 22.

For example, there occurs a case that the TV receiver 10 of this embodiment is influenced by an indirect lightning strike, in which case the ground portion GND side is temporarily given a high voltage. More specifically, the TV receiver 10 of this kind is configured in such a manner that when the influence of an indirect lightning strike is large, an anti-lightning circuit in the apparatus is activated and causes large power to escape to the primary side of the power source. When the influence of an indirect lightning strike is small, the anti-lightning circuit is not activated and a certain high voltage is generated at the ground portion GND.

Therefore, there is fear that if the high voltage at the ground portion GND is transmitted as it is to the front cabinet 12 side, a user who touches the front cabinet 12 may feel unpleasant.

In view of the above, in this embodiment, high voltage pulses having a relatively long wavelength of a high voltage generated at the ground portion GND side are converted into pulses having as low a voltage level as possible by dispersing those into relatively short pulses by means of the parallel circuit 26 consisting of the first resistor 24 and the high-voltage capacitor 25. Resulting pulses are caused to escape to the front cabinet 12 via the discharge tube 22.

Charge that has escaped to the front cabinet 12 is released from the front cabinet 12 by natural discharge or released to the ground portion GND side after the voltage of the ground portion GND has decreased.

As described above, being provided, in the discharge path 20 of the front cabinet 12, with the series circuit in which the discharge tube 22 is connected in series to the parallel circuit of the first resistor 24 and the high-voltage capacitor 25 and the second resistor 21 that is connected in parallel to the above series circuit, the TV receiver 10 of this embodiment can effectively ground the metal portion of the cabinet 12 and cope with an indirect lightning strike or the like while reducing impact of static electricity and preventing generation of a high voltage.

Fig. 2 is a schematic diagram showing the configuration of an electronic apparatus according to a second embodiment of the invention. The components in Fig. 2 having the same components in Fig. 1 are given the same reference numerals as the latter and will not be described.

As in the case of the first embodiment, this embodiment is directed to a TV receiver 10 using a CRT 11 that has a metal front cabinet 12.

In this TV receiver 10, a discharge path 30 between the front cabinet 12 and the ground portion GND has a parallel circuit 33 consisting of a resistor 31 and a discharge tube 32.

Inserted between the front cabinet 12 and the ground portion GND, the resistor 31 serves to absorb a current of CRT discharge that occurs constantly.

Connected in parallel to the resistor 31, the discharge tube 32 discharges at a voltage of 7 kV, for example.

The parallel circuit 33 having the above structure effectively discharges a voltage that occurs at the front cabinet 12 side and thereby keeps the front cabinet 12 side at a low potential. Further, the parallel circuit 33 prevents a sudden flow of current by means of the resistor 31 and thereby reduces the influence of static electricity to a user.

As described above, being provided with the parallel circuit 33 in the discharge path 30 of the front cabinet 12, the TV receiver 10 of this embodiment can effectively ground the metal portion of the cabinet 12 while reducing impact of static electricity and preventing generation of a high voltage.

Although in each of the above embodiments the electronic apparatus to which the invention is applied is a TV receiver using a CRT, the invention is not limited to such a case. The invention can similarly be applied to other electronic apparatuses having a metal cabinet.

The cabinet for which a discharge path is provided is not limited to a cabinet that is made of metal entirely and may be a cabinet only part of which is made of metal.

As described above, in one electronic apparatus according to the invention, the series circuit in which the discharge tube is connected in series to the parallel circuit of the first resistor and the high-voltage capacitor and the second resistor that is connected in parallel to the above series circuit are inserted in the discharge path that connects the metal portion of the cabinet to the ground portion provided in the electronic apparatus.

Therefore, in the electronic apparatus having the metal cabinet, the above discharge path makes it possible to effectively ground the metal portion of the cabinet and to cope with an indirect lightning strike or the like while reducing impact of static electricity and preventing generation of a high voltage.

In another electronic apparatus according to the invention, the parallel circuit consisting of the resistor and the discharge tube is inserted in the discharge path that connects the metal portion of the cabinet to the ground portion provided in the electronic apparatus.

Therefore, in the electronic apparatus having the metal cabinet, the discharge path provided with the above parallel circuit makes it possible to effectively ground the metal portion of the cabinet while reducing impact of static electricity and preventing generation of a high voltage.

## Claims

1. An electronic apparatus (10) having a cabinet (12) formed at least partially of metal, comprising:
a discharge path (20) connecting a metal portion of the cabinet to a ground portion provided in the electronic apparatus, the discharge path including:
a series circuit of a discharge tube (22) and a parallel circuit (26) of a first resistor (24) and a high-voltage capacitor (25); and
a second resistor (21) connected in parallel to the series circuit.

2. The electronic apparatus according to claim 1, wherein the first resistor and the high-voltage capacitor of the series circuit are provided on the side of the ground portion.

3. The electronic apparatus according to claim 1, wherein the ground portion is provided on a chassis board of the electronic apparatus.

4. The electronic apparatus according to claim 1, wherein the electronic apparatus is a TV receiver including a CRT (11), and the metal portion of the cabinet constitutes a front cabinet that surrounds an outer circumferential portion of a face panel of the CRT.

5. An electronic apparatus (10) having a cabinet (12) formed at least partially of metal, comprising:
a discharge path (30) connecting a metal portion of the cabinet to a ground portion provided in the electronic apparatus, the discharge path including a parallel circuit (33) of a resistor (31) and a discharge tube (32).

6. The electronic apparatus according to claim 5, wherein the ground portion is provided on a chassis board of the electronic apparatus.

7. The electronic apparatus according to claim 5, wherein the electronic apparatus is a TV receiver including a CRT (11), and the metal portion of the cabinet constitutes a front cabinet that surrounds an outer circumferential portion of a face panel of the CRT.

## Patentansprüche

1. Elektronisches Gerät (10) mit einem zumindest teilweise aus Metall gebildeten Gehäuse (12), umfassend:
einen Entladungspfad (20), der einen Metallteil des Gehäuses mit einem Erdungsteil verbindet, der im elektronischen Gerät vorgesehen ist, wobei der Entladungspfad beinhaltet:
eine Reihenschaltung einer Entladungsröhre (22) und einer Parallelschaltung (26) eines ersten Widerstands (24) und eines Hochspannungskondensators (25); und
einen zweiten Widerstand (21), der mit der Reihenschaltung parallel verbunden ist.

2. Elektronisches Gerät gemäß Anspruch 1, wobei der erste Widerstand und der Hochspannungskondensator der Reihenschaltung auf der Seite des Erdungsteils vorgesehen sind.

3. Elektronisches Gerät gemäß Anspruch 1, wobei der Erdungsteil auf einer Chassistafel des elektronischen Geräts vorgesehen ist.

4. Elektronisches Gerät gemäß Anspruch 1, wobei das elektronische Gerät ein Fernsehempfänger einschließlich einer Bildröhre (11) ist und der Metallteil des Gehäuses ein Frontgehäuse bildet, das einen Außenumfangsbereich eines Frontpaneels der Bildröhre umgibt.

5. Elektronisches Gerät (10) mit einem zumindest teilweise aus Metall gebildeten Gehäuse (12), umfassend:
einen Entladungspfad (20), der einen Metallteil des Gehäuses mit einem Erdungsteil verbindet, der im elektronischen Gerät vorgesehen ist, wobei der Entladungspfad eine Parallelschaltung (33) aus einem Widerstand und einer Entladungsröhre (32) beinhaltet.

6. Elektronisches Gerät gemäß Anspruch 5, wobei der Erdungsteil auf einer Chassistafel des elektronischen Geräts vorgesehen ist.

7. Elektronisches Gerät gemäß Anspruch 5, wobei das elektronische Gerät ein Fernsehempfänger einschließlich einer Bildröhre (11) ist und der Metallteil des Gehäuses ein Frontgehäuse bildet, das einen Außenumfangsbereich eines Frontpaneels der Bildröhre umgibt.

## Revendications

1. Appareil électronique (10) comportant un coffret (12) au moins partiellement fait de métal, comprenant :
un chemin de décharge (20) reliant une partie métallique du coffret à une partie de masse prévue dans l'appareil électronique, le chemin de décharge comportant :
un circuit série constitué d'un tube à décharge (22) et d'un circuit parallèle (26) constitué d'une première résistance (24) et d'un condensateur haute tension.(25) ; et
une seconde résistance (21) connectée en parallèle avec le circuit série.

2. Appareil électronique selon la revendication 1, dans lequel la première résistance et le condensateur haute tension du circuit série sont prévu du côté de la partie de masse.

3. Appareil électronique selon la revendication 1, dans lequel la partie de masse est prévue sur une plaque de châssis de l'appareil électronique.

4. Appareil électronique selon la revendication 1, dans lequel l'appareil électronique est un téléviseur comportant un CRT (tube à rayons cathodiques) (11) et la partie métallique du coffret constitue un coffret frontal qui entoure une partie circonférentielle d'un panneau de face du CRT.

5. Appareil électronique (10) comportant un coffret (12) au moins partiellement fait de métal, comprenant :
un chemin de décharge (30) reliant une partie métallique du coffret à une partie de masse prévue dans l'appareil électronique, le chemin de décharge comportant un circuit parallèle (33) constitué d'une résistance (31) et d'un tube à décharge (32).

6. Appareil électronique selon la revendication 5, dans lequel la partie de masse est prévue sur une plaque de châssis de l'appareil électronique.

7. Appareil électronique selon la revendication 5, dans lequel l'appareil électronique est un téléviseur comportant un CRT (tube à rayons cathodiques) (11) et la partie métallique du coffret constitue un coffret frontal qui entoure une partie circonférentielle d'un panneau de face du CRT.
